# EUROPEAN PATENT APPLICATION

(11) **EP 3 093 128 A1**
(43) Date of publication of application: **16.11.2016**
(21) Application number: 16169113.4
(22) Date of filing: 11.05.2016
(51) Int. Cl.: B29C 70/30, B32B 27/12, C08J 5/24, B29C 70/54, C08J 5/04

(54) **METHOD OF FORMING COMPOSITE STRUCTURES**

(30) Priority: 15.05.2015 GB 201508375
(71) Applicant: Airbus Operations Limited, Bristol BS34 7PA (GB)
(72) Inventor: Price, Jonathan, Bristol, BS34 7PA (GB); Evans, Steven, Bristol, BS34 7PA (GB)
(74) Representative: Ribeiro, James Michael

(57) **Abstract**

A method of forming composite components is described in which a composite lay-up is created using varying fibre types across the lay-up. This can adapt the lay-up to forming processes in regions of the lay-up to be formed and uses fibre types which give the greatest strength benefits in areas which do not need to be formed. Regions not requiring forming may have binders in them activated prior to a forming step or steps, after which the formed regions may be impregnated with a matrix and the component cured.

## Description

### FIELD OF THE INVENTION

The present invention relates to laminated composite structures and components, particularly for the aerospace industry. In particular, the invention relates to improved methods for forming composite structures from laminated composite fibres, for primary structures such as aircraft wing structures.

### BACKGROUND OF THE INVENTION

Traditionally composite parts have been manufactured via labour intensive hand lay-up process, by a skilled laminator. In known methods, a base material for the lay-up, in the form of either pre-preg or dry fibre composite material, is laminated into a mould tool, which matches the geometry of the final component, so that the base material is formed directly into the shape of the final part. Using this approach enables complex geometries to be achieved as the laminators' skill is used to tailor the material into the contours of the component. However hand lay-up does not enable high deposition rates of material.

In all market sectors there is a desire to reduce the overall manufacture process time throughout all steps in the production of a cured composite part. Particularly for large scale or thick components having many plies, and particularly within the Aerospace & Automotive sectors, this has resulted in the development of automated deposition processes for all material formats, such as: Automated Fibre Placement (AFP), Automated tape lay-up (ATL) and Dry Fibre AFP (DAFP). However these complex deposition systems have limitations, primarily with respect to the geometrical shapes which they are able to create, due to the large physical size of the end effector that delivers the material onto the tool. For components where the geometry is "simple" and generally flat, there is less of a problem with access for the end effector. An example is in the formation of a composite wing skin part in the aerospace sector in particular.

For more integrated structures, and for components with more complex shapes, the size of the end effector can prevent it from depositing inside cavities or recesses in the shape of the lay-up, since the end effector may not fit or be able to reach between two opposing walls of the feature or features, for example. This necessitates further processing of the un-cured laminate structure (also known as a preform) to generate the final shape. Typically this additional processing is reliant on a method of forming, e.g. in a press or a mould, the laminated preform into the desired shape prior to curing. All forming process require the use of heat, pressures and additional mould tooling or consumables, which adds to the overall process time and cost.

However there are certain drawbacks associated with these forming processes. One drawback is that there is a limit to the geometrical shapes and thicknesses of a laminate that can be "formed" without inducing unacceptable features in to the structure, such as fibre deviations and wrinkles. This is a significant problem for highly loaded structures, where the laminate thickness can be over 20mm thick in, for example, a wing structure of an aircraft. Further, carbon fibres are stiff and therefore they are difficult to bend and they do not stretch, which makes forming them around corners a difficult task.

Different composite material formats can be more challenging to form than others due to their inherent properties. Pre-preg consists of fibre (unidirectional or woven) with a film of uncured matrix already incorporated (pre-impregnated) into the sheet material. The resin is sticky, therefore once plies of carbon are laminated together into a stack, they adhere to each other and do not easily slip relative to one another. The result is that forming the pre-preg can cause wrinkling and other undesirable features in the preform.

Fibres in dry fibre laminate preforms generally do not adhere to each other and so are able to "slip" over each other, unless specific binders are placed within the fibre stack and activated by heat and/or pressure. Dry fibre preforms can come in the form of Unidirectional fibres (UD), woven fibres, non-crimp fabrics (NCF - generally layers of unidirectional fibres that are assembled and stitched together), chopped strand mat (CSM), or any other known form of fibres for structural composite applications.

The terms resin, matrix or impregnation matrix can include any type of polymer resin or polymer resin mixture presenting low viscosity and which can be solidified by being polymerized for general use in forming composite materials. Low viscosity is needed in certain processes such that any kind of infusion or injection process is possible. The viscosity of a matrix or resin in pre-preg materials can of course be higher. As is known to the skilled reader, a matrix can be injected under pressure, or infused by drawing the matrix in under vacuum in a number of known processes not described in detail herein.

The term "fibre" is used in the following description to refer to any type of structural fibre such as carbon fibres, glass fibres, aramid fibres, polyethylene (polyolefines), basalt or natural fibres, as are generally used in composite materials.

In the particular case of the aerospace sector, the predominant material for composite primary structure components is carbon fibre pre-preg. Pre-preg currently has the highest structural performance of all material formats and so is beneficial in these implementations, where structural performance and light-weighting is key.

Many parts of aircraft structures would traditionally be manufactured from a number of separate parts which are then joined together via mechanical fasteners to create the overall structure. The mechanical bolting of joints in composite structures is not efficient.

In the aerospace sector, utilisation of fibre composite materials is increasing for primary structure wing applications. Historically, primary wing structure components made from composite materials have followed the philosophy of "black metal design", where composite materials are used in place of metals for components designed following the same design rules, shapes and philosophies as are used for metals. In using this approach, the greatest benefits of using composite material are not necessarily fully exploited.

### SUMMARY OF THE INVENTION

A first aspect of the invention provides a method of forming a composite component, comprising the steps of:
a) providing a lay-up comprising a first region comprising dry fibres and a second region comprising pre-preg fibres;
b) forming the lay-up to create a non-planar portion at the first, dry-fibre, region;
c) applying a matrix to at least the first, dry-fibre, region; and
d) curing the formed component to solidify the matrix of the component.

The method of the invention therefore provides a method of forming a composite material by using varying fibre types across the lay-up in order to adapt it to forming processes in regions of the lay-up to be formed and to use fibre types which give the greatest strength benefits in areas which do not need to be formed.

The lay-up is provided in step a), and then formed in step b) after step a), for instance by bending or folding the lay-up.

Providing the lay-may up may comprise depositing pre-preg fibres in an automated fibre depositing process and/or depositing dry fibres using an automated dry fibre depositing process. This can be done to improve a speed of creating the lay-up with mixed fibre types.

Typically the composite component is a laminate composite component, and providing the lay-up comprises providing a laminated lay-up with layers of dry-fibres and layers of pre-preg fibres. Typically the non-planar portion of the lay-up has more than 20 layers of dry-fibres - for instance in the case of a wing-box it may have 30-50 layers of dry-fibres.

The lay-up is laminated in step a), and then formed in step b) after step a), for instance by bending or folding the lay-up. In other words all of the layers of dry-fibres are simultaneously formed (for instance by bending or folding the lay-up) after they have been stacked on top of each other to form to the lay-up. The non-planar portion is formed after the laminated lay-up has been provided - rather than bending/folding each ply of the lay-up one by one as the layers are stacked on top of each other during step a). The use of dry-fibres in the first, dry-fibre region enables the laminate lay-up to be formed more easily. Typically the dry-fibres and/or the layers of dry-fibres slide over one another as the lay-up is formed to create the non-planar portion at the first, dry-fibre, region.

A majority of the fibres, or layers of dry-fibre present in the thickness of the lay-up in the first region, prior to application of the matrix, may be dry fibres. Having a majority of dry fibres helps adapt the material to being formed while maintain some strength properties of other fibre types such as pre-preg in a part of the thickness of the material.

Similarly a majority of the fibre layers present in the thickness of the lay-up in the first region, prior to application of the matrix, may be layers of dry fibres.

All of the fibres present in the thickness of the lay-up in the first region, prior to application of the matrix, may be dry fibres. This can provide the greatest degree of flexibility and formability in the dry fibre region(s).

A majority of the fibres present in the thickness of the lay-up in the second region may be pre-preg fibres. This allows other forms of fibre to be accommodated if necessary.

Similarly a majority of the fibre layers present in the thickness of the lay-up in the second region may be layers of pre-preg fibres.

All of the fibres present in the thickness of the lay-up in the second region may be pre-preg fibres. This can provide greatest strength in the pre-preg fibre regions.

Prior to application of the matrix, the lay-up may comprise at least one region comprising dry fibres, disposed between at least two regions comprising pre-preg fibres.

The lay-up, prior to application of the matrix, may comprise a plurality of first regions comprising dry fibres, disposed on different sides of a second region comprising pre-preg fibres.

The lay-up, prior to application of the matrix, may comprise a plurality of dry fibre regions disposed between plural pre-preg fibre regions, wherein the method further comprises forming the preform at the dry fibre regions prior to application of the matrix.

Forming the component may comprise forming a channel having a closed bottom and an open top, wherein the first, dry fibre region or regions, is/are disposed at and/or adjacent at least one of the top edges of the channel.

The forming step may comprise forming a bend in the lay-up having an angle of more than 30 degrees, preferably more than 60 degrees, more preferably more than 90 degrees.

The dry fibres may be provided only in, near, or adjacent to regions to be bent, formed or folded in the forming process.

Applying a matrix to the dry fibre region may include a matrix injection or infusion process. The matrix injection process may be, for example, a Resin Transfer Moulding (RTM) process; or a Same Qualified Resin Transfer Moulding (SQRTM) process. The infusion process may be, for example, a Liquid Resin Infusion (LRI) process; or a Resin Film Infusion (RFI) process in which the lay-up comprises layers of film and the matrix is applied to the first, dry-fibre, region by infusion from the layers of film.

The method may further comprise the step of locally activating a first portion of the lay-up to activate a binder or a thermoplastic layer in the first portion of the lay-up, preferably while leaving a second portion of the lay-up in an un-activated state, prior to applying a matrix to the dry-fibre region.

The first portion may comprise dry fibres.

The second portion may comprise dry fibres or pre-preg fibres or a combination of one or more regions of dry fibres and one or more regions of pre-preg fibres.

The step of locally activating the first portion may comprise applying localised heat and/or pressure to the first portion.

The method may further comprise forming the second portion of the lay-up after the first region has been activated and prior to applying the matrix to the dry-fibre region.

The method may further comprise activating the second portion of the lay-up after the second portion has been formed, by local activation of binders in the second portion.

A further aspect of the invention provides a composite component formed according to any aspect of the methods described herein.

A further aspect of the invention provides an uncured composite preform comprising at least one first region comprising dry fibres and at least one second region comprising pre-preg fibres, wherein a majority of the fibres present in a thickness of the preform in the first region are dry fibres and a majority of the fibres present in a thickness of the preform in the second region are pre-preg fibres, the lay-up being formed, curved, bent or folded at the first, dry-fibre, region or regions to provide at least one formed region adjacent the second, pre-preg fibre, region or regions.

A further aspect of the invention provides an aircraft comprising a composite component as described herein.

### BRIEF DESCRIPTION OF THE DRAWINGS

Embodiments of the invention will now be described with reference to the accompanying drawings, in which:
Figure 1 shows an aircraft which may incorporate components formed according to the methods described herein;
Figure 2 shows a schematic view of a prior art wing box assembly;
Figure 3 shows an assembly for a wing box according to the methods of the present invention;
Figures 4A and 4B show forming steps performed on a component in accordance with a method of the invention;
Figure 5 is a schematic sectional view showing a pre-preg to dry fibre transition at a corner region;
Figure 6 shows a flat lay-up which can be folded to form the corner region of Figure 5;
Figure 7 shows a male mould tool carrying a U-shaped lay-up;
Figure 8 shows the U-shaped lay-up transferred to a female mould tool;
Figure 9 shows the spar flanges formed using the female mould tool as a mandrel;

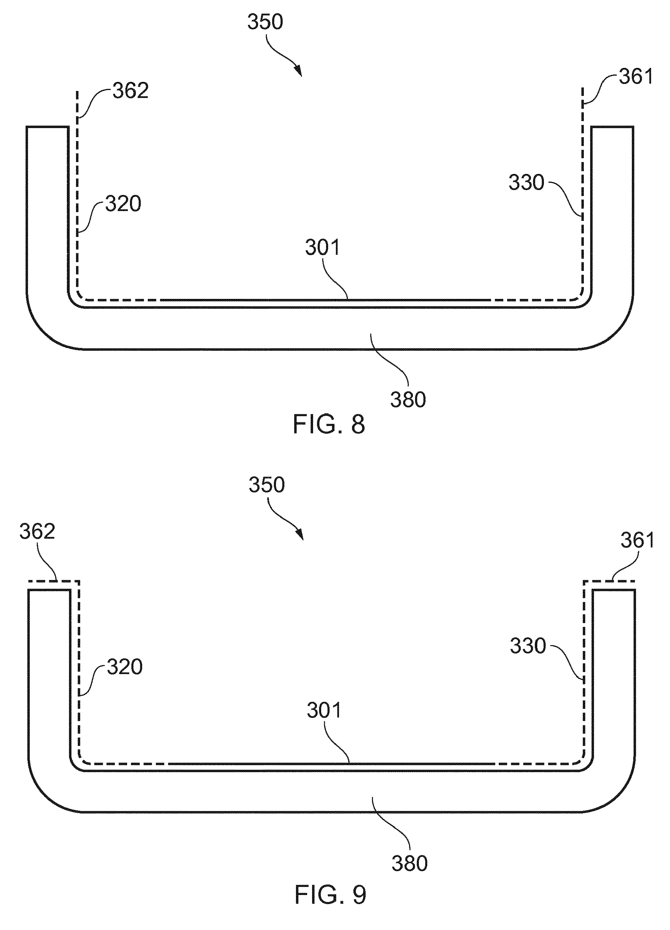

Figure 9 shows an alternative formed lay-up in which the spar webs are pre-preg and only the flanges are dry fibre;

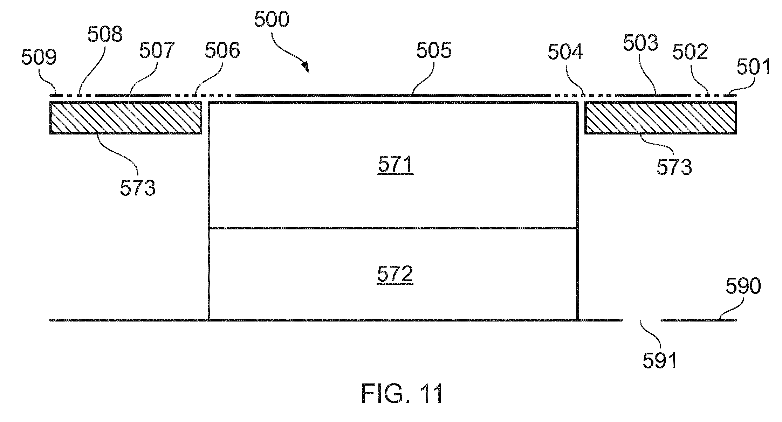

Figure 11 shows a flat lay-up;

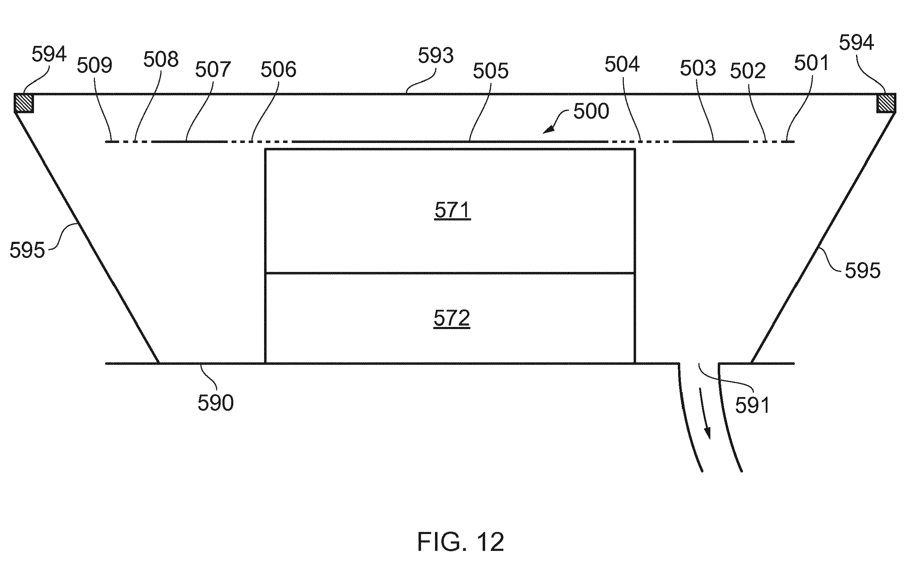

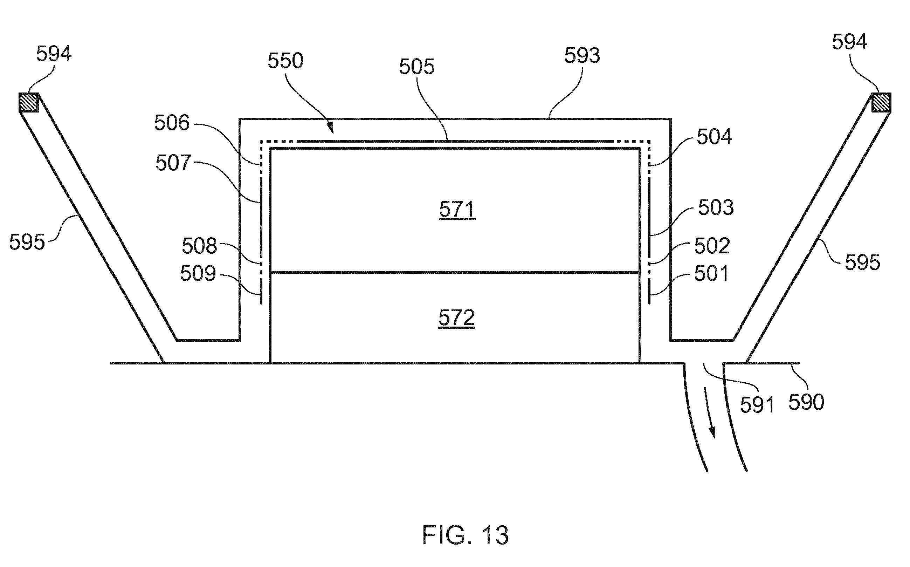

Figures 12 and 13 show a drape forming process applied to the flat lay-up of Figure 11;

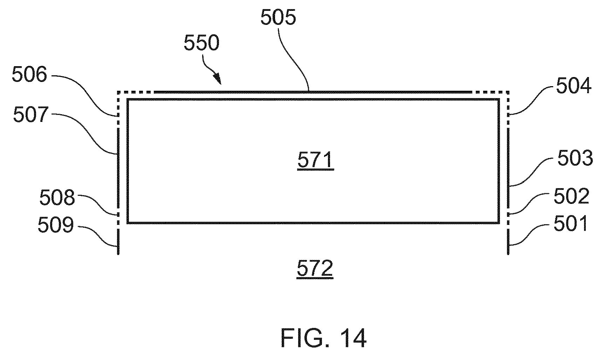

Figure 14 shows the U-shaped lay-up formed by the drape forming process of Figure 13 being prepared for further forming;

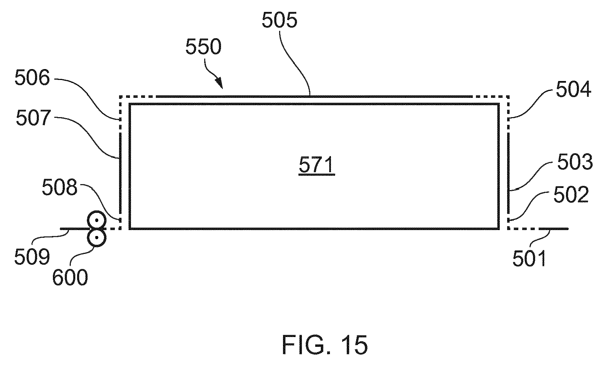

Figure 15 shows the spar flanges being formed by rollers;

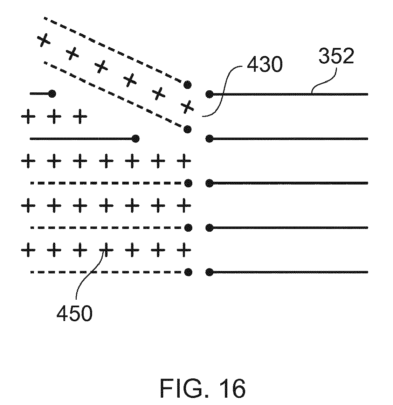

Figure 16 shows an RFI lay-up arrangement;

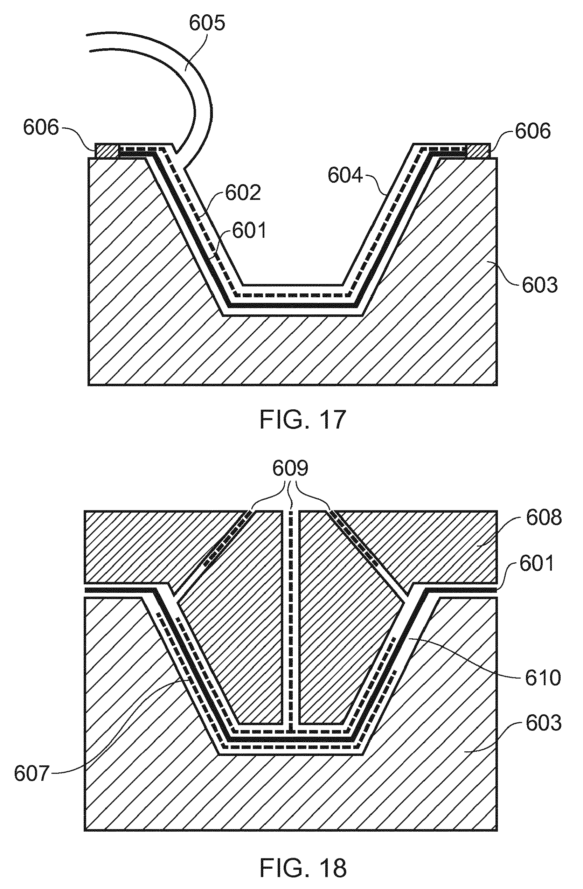

Figure 17 shows an RFI curing arrangement;
Figure 18 shows an RTM curing arrangement; and

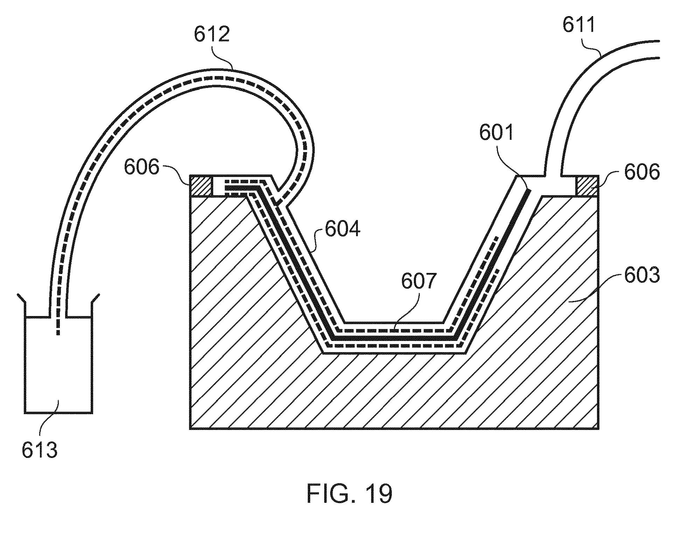

Figure 19 shows an LRI curing arrangement.

### DETAILED DESCRIPTION OF EMBODIMENT(S)

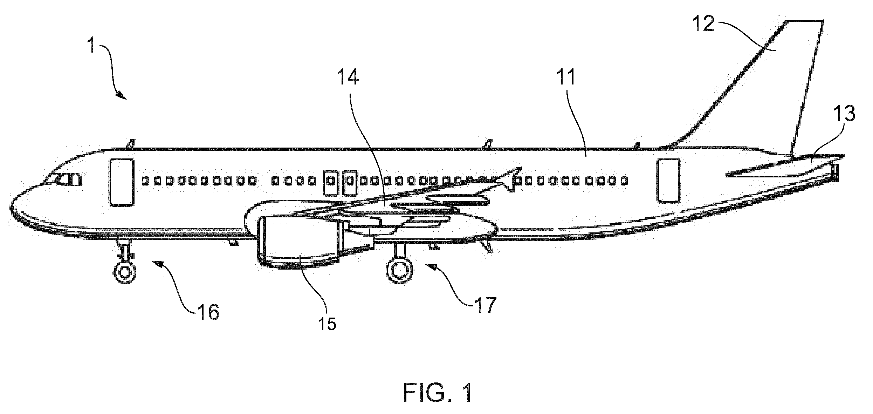

Figure 1 shows an aircraft 1 into which components made according to methods of the invention can be incorporated. The invention relates to generally sheet-like, web-like, planar or curved-planar components, which can form parts of the primary structure of the aircraft, for example, forming parts of the fuselage 11, parts of the vertical tail fin 12, or the horizontal tail planes 13. Components of the invention may also be integrated into a wing 14, elements of an engine housing 15, and even into parts of the under carriage 16 and 17, or doors for the under carriage. The invention relates to the stiffening of generally sheet or web-like components such as wing skins, or generally web-like features of bulkheads, spars or ribs of an aircraft, for beams and bulkheads for any structure, as examples.

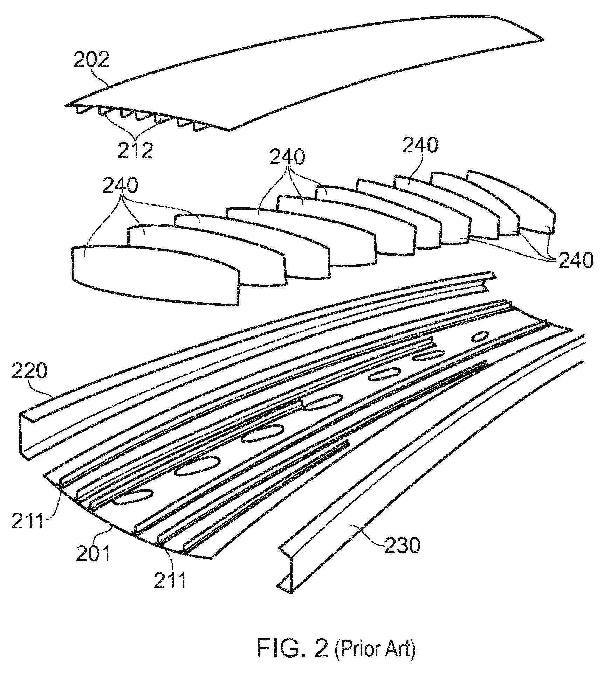

Figure 2 shows a known assembly for forming a wing box of the prior art. The wing box is made up of a lower cover 201, and an upper cover 202, each of which is reinforced with a plurality of stringers 211 and 212. A front spar 220 and rear spar 230 are provided. A plurality of ribs 240 is also provided. The assembly method generally comprises attaching a front spar and rear spar to the lower cover using fixing means such as bolts or rivets. Rib feet for attaching the ribs 240 to the lower cover 211 are attached to the lower cover and ribs 240 can then be assembled on to the rib feet and attached to the front 220 and rear 230 spars. Finally, the upper cover 202 can be assembled on to the ribs 240 and front 220 and rear 230 spars to create the fully formed box. All of the joints between parts generally include point fixing means such as bolts or rivets and the stress concentrations created by such fixing means can mean additional strength is required in the components being fixed, which results in an increase in overall weight.

With increasing use of composite materials in structural components, such as those used in airframe structures and in wings in particular, the most structurally efficient way to arrive at light weight and lower cost composite structures is to increase the integration of parts. Therefore, where possible, parts are integrally formed as one piece rather than being formed separately and joined together afterwards. Therefore it can be beneficial in the development of composite structures to integrate increasing levels of structural functionality via integration of the structure into a lower number of component parts.

In the following described embodiment, wing spar and cover components were combined into one part. This part can be fabricated by depositing pre-preg material onto a male mandrel, to produce a substantially U shaped preform. This preform can be removed from the mandrel and the outward facing spar caps formed. Rib feet and stringers are then added and the whole assembled preform is then cured.

However, using standard known methods, it had not proved possible to form the outward facing cap along the full length of the wing with the large cross sectional thickness required for a highly loaded structure.

The process of slipping and shearing of the fibre is important to being able to "form" it into complex geometries (NB all of the forming process will induce a degree of deviation into each ply of the laminate). With pre-preg laminates that are adhered together, sufficient slippage/shearing of the material is not generally obtained.

Mixed fibre laminates as described herein overcome this issue by locally changing the type of material incorporated within the lay-up of the un-cured preform. In embodiments of the invention, dry fibres are incorporated into the laminate in one or more regions of a preform structure where it needs to be formed. This can be achieved with dry fibre AFP or NCF material.

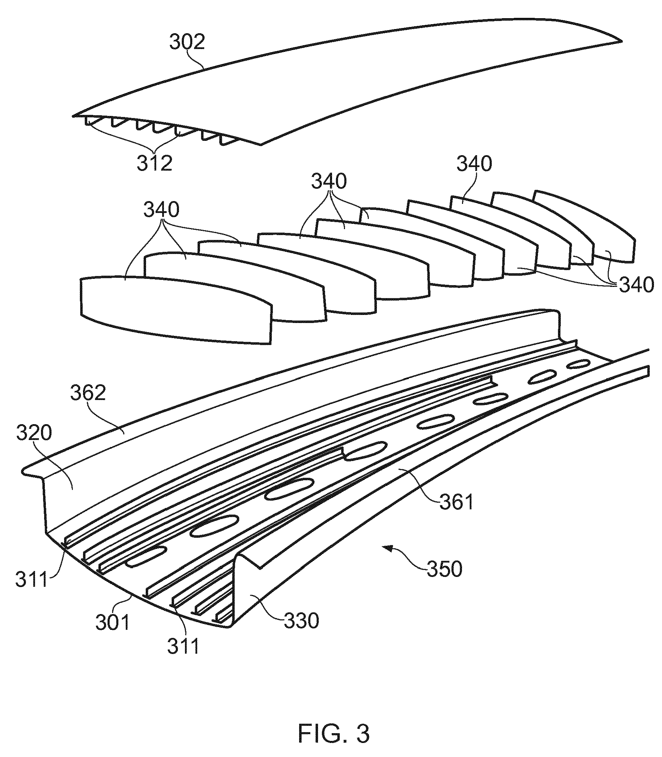

Figure 3 shows an assembly for forming a U-box according to an embodiment of the invention. The upper cover 302 comprising stringers 312 is provided as illustrated, generally in a manner similar to that provided for the assembly of Figure 2. Similarly, a plurality of ribs 340 is provided in a similar arrangement to the known method illustrated in Figure 2.

The methods described herein permit a substantially U-shaped structure to be provided to form the lower part of the wing box assembly. The substantially U-shaped lower wing box component comprises a lower cover 301, which is integrally formed with front spar 320. Stringers 311 are provided on the lower cover 301 in substantially the same manner as provided for the prior art method of Figure 2. In the assemblies of Figures 2 or 3, the stringers 211 or 311 can be bonded to, integrally formed with, or bolted to the lower cover and/or the upper cover in a manner which is generally known to the person skilled in the art and so is not described in detail herein.

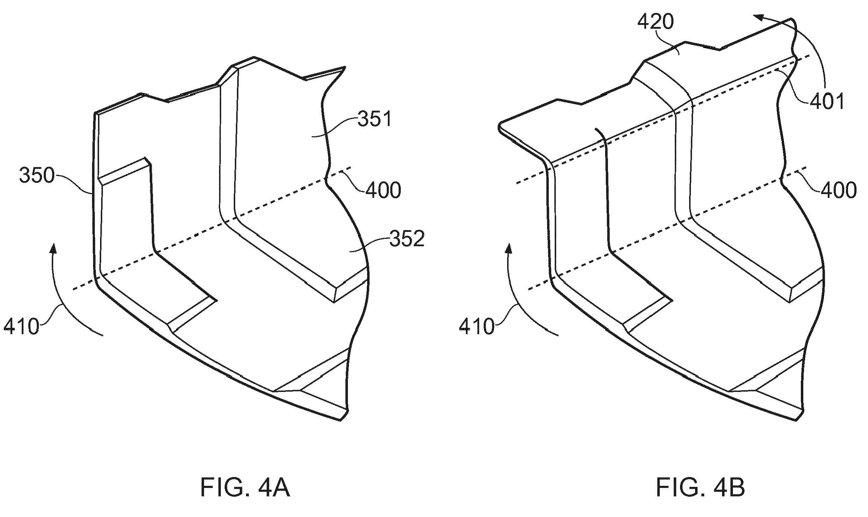

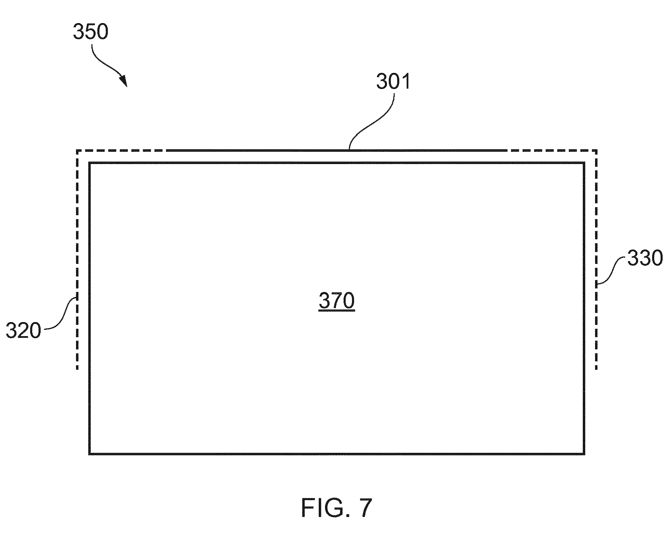

The methods of the present invention allow the U-box component 350 of Figure 3 to be formed integrally from composite materials. In a first example, the lay-up for the composite U-box 350 is formed directly in a female U-shaped mould. The lay-up is formed in the mould using any form of known automated fibre placement, automated tape lay-up and dry fibre automated fibre placement. In a second example, the lay-up is formed directly onto a male tool, as described in further detail below with reference to Figure 7, then transferred to a female U-shaped mould as shown in Figures 8-10. In its initial laid-up form, the U-box component 350 does not yet comprise the spar caps shown as flange portions 361 and 362, which are eventually used to attach the upper cover 302 to the front 320 and rear 330 spars. Using the method of the invention, which will be described in greater detail in relation to Figures 4A and 4B, the lower cover 301 and the spars 320 and 330, are comprised of at least a majority of pre-preg fibres through the thickness of the lay-up and preferably entirely of pre-preg fibres. Pre-preg fibres have generally been found to have the greatest structural performance and so are useful in structural components such as a wing box illustrated in Figure 3. In order to form the flange portions 361 and 362 for the spar caps, it is necessary to create a relatively sharp crease or fold in the lay-up prior to curing. This is because the automated fibre placement technology available is not necessarily well suited to laying up fibres in the complex shapes shown in order to form the lower wing box part 350 illustrated in Figure 3. As described above, pre-preg fibres do not necessarily lend themselves well to being folded, especially in thick profile sections, which are generally necessary for important major structural parts such as the wing box assembly of Figure 3. Therefore, in the method of the invention, dry fibres are placed in the region of the crease which forms the flanges 361 and 362 of the lower wing box part 350. The dry fibres therefore provide a portion of the lay-up in which the fibres are able to slide over one another and therefore are better suited to being folded in the manner required to form the flanges 361 and 362. Once the flange sections 361 and 362 have been formed, then the overall component 350 can be cured. The forming operation utilised to fold the flanges 361 and 362 will later be described in greater detail with reference to Figures 8 and 9.

In an alternative method, one or more of the dry-fibre regions of the lay-up may be locally activated to locally activate a binder or a thermoplastic layer in one or more sub-regions of the lay-up, preferably prior to forming the lay-up, in at least one un-activated dry-fibre region or regions. Therefore, in the above example, the dry fibres placed in the region of the crease which forms the flanges 361 and 362 of the lower wing box part 350 may be left un-activated, while dry-fibre regions which are adjacent the areas to be formed, namely those which may appear in the lower cover 301 and the spars 320 and 330, may be secured or stiffened, or at least partially solidified by local activation. The substantially planar portions of the flanges 361 and 362 may also be locally activated, leaving only an at least predominantly dry-fibre, region of the crease, in between the flanges 361 and 362 and the spars 320 and 330, un-activated and therefore still formable. The crease may then be activated and subsequently impregnated with matrix and cured after the forming step. The forming operation may include the application of heat. If this heat applied during the forming operation is sufficiently high to activate the binder of the dry fibre region, then the forming operation may also activate the binder in the dry fibre region to leave a formed and activated region of dry fibres. This has the advantage of adding stiffness to the part during the forming operation, which allows easier handling or manipulation of the preform during subsequent steps. The methods described herein can employ any binder suitable for use in a composite material to bind the fibres prior to curing. Binders can come in different forms. One example is marketed by Hexcel^{™} as Toughened NCF, Biaxial, (45°/135° & 135°/45°), 2x268gsm, IMA, V800E veil (6/6/0), which combines a binding and toughening function. An alternative is a Toho-Tenax^{™} Toughened UD-Woven Fabric - IMS65 fibre, 194gsm, Toughened TA1902-05 (5gsm), EP05311 Binder (6gsm), 1.27m wide, PB1_06-V8_05-IMS65-UD-0194-1270

Prior to curing, the dry fibres are impregnated with a polymer matrix in order to complete the composite material which is required in the initially dry fibre regions. Methods already exist for impregnating and curing dry fibres in a mould. One such available technology is known as same qualified resin transfer moulding (SQRTM). SQRTM is a closed moulding method which combines the processing of pre-preg materials and liquid moulding. SQRTM is a development on standard resin transfer moulding (RTM) which is also generally available and known to the skilled reader. RTM takes a dry fibre preform and impregnates the dry fibre with matrix. Then a chemical reaction is thermally activated by heat in the fibre mat or lay-up and in the wall of the mould. RTM is generally a closed-mould, vacuum-assisted process. In the RTM process, a fibre preform or lay-up is placed into a mould cavity having the shape of the desired part. The mould is then closed and a generally low viscosity resin is pumped into the mould under pressure, displacing the air within and around the fibres until the mould is filled. After the fill cycle, the cure cycle starts, during which the mould is heated and the resin polymerises to become a rigid plastic.

SQRTM follows a similar process, but substitutes the dry fibres with a pre-preg lay-up. In SQRTM, pre-preg plies are arranged within the mould, the mould is closed and then further liquid resin is injected into the mould. Preferably, the injected resin is the same resin that is found within the pre-preg and provides the same mechanical properties. Differently to the RTM process, in SQRTM, the injected resin is intended to fill cavities around the part, but is not intended to impregnate the pre-preg.

In the method of the present invention, a mixture of both pre-preg fibres and dry fibres is employed at different regions in the lay-up and so a combination of the effects generated in SQRTM and traditional RTM is created, where in regions comprising dry fibres, the matrix is impregnated in the dry fibres and in regions where the lay-up comprises pre-preg fibres, the resin forms around the pre-preg as in a standard SQRTM process. Alternative methods for fibre impregnation and cure include Resin Film Infusion (RFI), Liquid Resin Infusion (LRI) or any other suitable method known to the skilled reader. The aforementioned SQRTM, RFI and LRI methods will be described in greater detail below with reference to Figures 17-19.

Figures 4A and 4B illustrate in greater detail regions of the lower wing box cover 350 of Figure 3 which can benefit from the features of the present invention.

Figure 4A illustrates a portion of the lower wing box 350, including a planar part 352 of the lower cover 301 where it meets the spar 320. There are two ways in which the initial angle in the lower wing box cover can be formed at the line 400. One manner in which this profile can be formed, is if the pre-preg lay-up is deposited into a mould having a complimentary shape, so that the component is laid-up on the inside of the mould and the automated deposition of the pre-preg forms the desired angle in the initial structure. In this manner, a lay-up comprising pre-preg fibre material having pre-formed angles in it is provided. However, alternatively, the angle at line 400 may also be created by depositing dry fibres at the region of the angle 400 and pre-preg fibres either side of it, to form the generally planar parts 351 and 352 of the lay-up. A dry fibre region is therefore formed between adjacent pre-preg fibre regions. It will be apparent to the skilled reader, that the generally planar parts 351 and 352 may still incorporate features, thickness changes and slight variations in profile, but they are generally of a planar form, having a significant extent in a direction of their respective planes, and a thickness in a perpendicular direction to their respective planes sufficiently small as to give them a substantially sheet or web-like configuration. The methods of the invention therefore provide substantially planar regions of a preform which are primarily made from pre-preg fibre material, while in between the pre-preg regions, dry fibre regions are provided to permit the desired forming procedures.

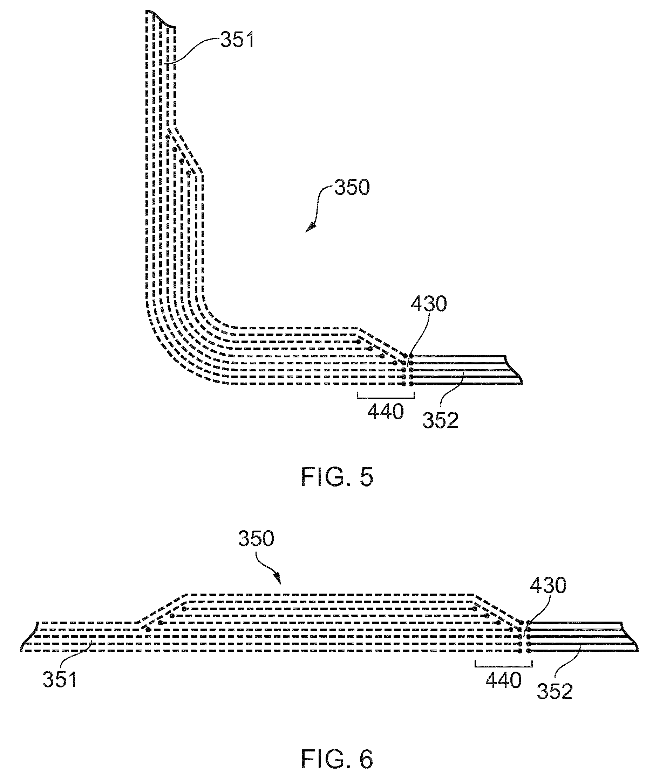

A further alternative lay-up arrangement is shown in Figure 5 in which the lower cover 301 (including the planar part 352) comprises layers of pre-preg fibres shown in solid line, and the rest of the lay-up comprises layers of dry-fibres shown in dashed line (both the spar 320 and the flange 362 being formed entirely from layers of dry-fibres).

The number of layers shown in Figure 5 is schematic only. In the case of Figure 5 the non-planar portion of the lay-up is shown with only nine dry-fibre layers, but more typically it will have more than 20 layers of dry-fibres - for instance it may have 30-50 layers of dry-fibres. In the thickest part of the cover the number of pre-preg fibre layers may be as high as 120.

Figure 5 illustrates a transition 430 between the layers of pre-preg fibres (referred to below as "pre-preg plies") and the layers of dry-fibres (referred to below as "dry fibre plies") where they butt up against each other. This transition can be provided in a number of different ways to what is shown in Figure 5. For example, the transition can be achieved by gradually dropping off the pre-preg plies along a ramp distance 440, and replacing the pre-preg plies with dry fibre plies. The ply transition 430 is staggered so as to ultimately achieve at least a majority of dry fibres at the region of the fold 400. The transition represented within Figure 5 and 6 may not be representative of the true ramp distance of the actual transition within the region of the fold 400.

In an alternative method, alternating layers of dry fibre and pre-preg can be interwoven and the proportion of pre-preg to dry fibre can gradually transition from 100% pre-preg, through around 50% pre-preg and 50% dry fibre, to up to around 100% dry fibre, as seen through the thickness of the material, at the point at which the fold 400 is eventually to be formed.

However, it will be appreciated that providing a majority of dry fibres and a relatively low proportion of pre-preg fibres in the region to be formed can also realise at least some of the benefits of the invention. For example, pre-preg fibres may be provided at the outer extent of the fold to be formed. By providing at least a proportion of dry fibres in the thickness of the lay-up, layers of fibre in the lay-up can slide over one another to enable the forming of desired features in a preform. A preform can therefore beneficially comprise both pre-preg and dry fibres through a thickness of the lay-up.

Therefore, in the case of the component of Figure 4A, the initial fold 400 may be provided by folding a substantially planar or sheet-like lay-up in a direction of arrow 410. This folding step may be carried out after locally activating a binder in one or more of the substantially planar regions of the lay-up.

Rather than being laid-up into a female mould or onto a male mould to form a U-shape, the lower wing box 350 may be laid up as a substantially flat sheet which is then folded to form both fold lines 400, 401. Figure 6 illustrates the lay-up as a substantially flat sheet before it has been formed to generate the folds 400 or 401. The layers are stacked on top of each other to form the stack of Figure 6 which is subsequently folded.Figure 4B shows the forming of a second fold 401 in order to form, for example, the flange portions 361 and 362 of the U-box component 350 of Figure 3.

Again, as described in relation to Figure 4A, in the region of the fold line 401, dry fibres can be deposited so that at least a proportion, or a majority, or preferably the entirety, of the thickness of the lay-up in the region of the fold 401 comprises dry fibres. The entire thickness of the lay-up may at this region 401 be comprised of dry fibres. Therefore, in order to form the flanged portions 420, a fibre based preform can be folded at a region 401 in which the lay-up comprises primarily dry fibres. In this manner, a lay-up can be provided comprising pre-preg fibres in regions where the lay-up has been deposited substantially in its final form for curing, so needing no forming prior to the curing procedure. Further, the lay-up can comprise at least a majority of dry fibres in regions where the lay-up is to be further formed or folded to arrive at the eventual shape of the component before the curing stage.

In the example described above, the planar part 351 shown in Figure 4A (which forms both the spar 320 and the flange 362) is formed entirely of dry fibre with no pre-preg fibres. In an alternative example, the spar 320 and flange 362 may be formed from pre-preg (like the lower cover 301) and only the regions of the fold lines 400, 401 are formed from dry fibre, with transitions between the dry fibre and pre-preg as shown in Figures 5 and 6.

As described above, the whole component may be cured in a single operation after the forming step or steps. Further, binders in one or more dry-fibre portions of the component may be locally activated before the forming step or steps, to secure or stiffen the lay-up in regions where the forming is not to be carried out. This can provide formable regions in between activated sections of the component or lay-up. This can ease manipulation of the lay-up in the forming steps, since the activated sections will remain in their desired shape while the forming of the un-activated sections takes place.

Figure 7 illustrates the initial lay-up operation onto a male tool 370. In Figure 7 and subsequent drawings, pre-preg fibre regions are indicated in solid line and dry-fibre regions are indicated in dashed line.

As has been previously discussed, the lay-up can be deposited onto the male tool 370 using any form of known automated fibre placement, automated tape lay-up or dry fibre automated fibre placement. The laid-up preform comprises at least a majority of pre-preg fibres at the cover region 301 and at least a majority of dry fibres at the spar regions 320 and 330.

Figure 7 shows the step of providing the laminated lay-up, and Figures 8 and 9 show the subsequent forming stage for the lower wing box 350. The U-shaped lay-up is transferred into a complimentary female mould 380. The female mould is designed to allow the spar flange regions to protrude from the top of the mould. The female mould is shaped to contain the cover and spar regions of the preform. The spar flange regions 361 and 362 are unbounded by the female mould to permit the folding operation.

The spar flange regions 361 and 362 protruding from the female mould are folded to create the spar flange 361 and 362 of the lower wing box 350. This may be performed by a rolling operation. Alternatively, this may be performed by a pressing operation. It will be apparent to the skilled reader, that other suitable forming methods may be used.

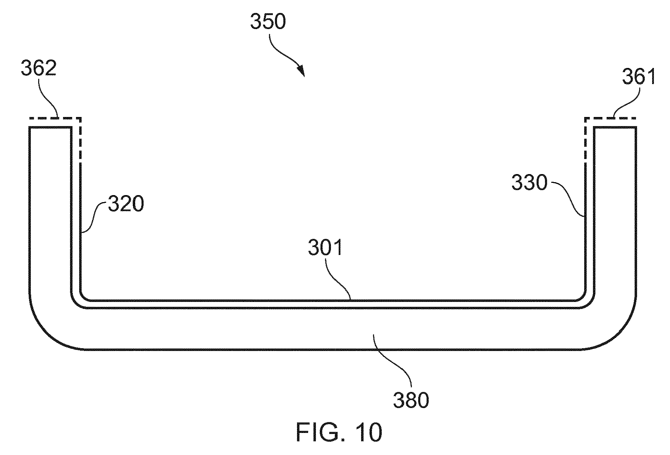

Figure 10 illustrates the final forming stage for a lower wing box of an alternative embodiment, in which the spar regions 320 and 330 comprise at least a majority of pre-preg fibres (shown in solid line), and only the spar flange regions 361 and 362 are dry-fibre (shown in dashed line).

Figures 11-15 illustrate an alternative method by which the lower wing box 350 can be formed. In this case the lower wing box is deposited as a substantially planar or sheet-like lay-up. The lower wing box shape is subsequently provided by performing a series of folding operations.

Depositing a generally flat sheet of fibres as shown in Figure 11, be they dry fibres or pre-preg fibres, is in general the fastest way in which a lay-up can be formed by known automated depositing technologies. It can therefore be advantageous to create a product from a single flat sheet lay-up, which is then formed to provide the eventual preform for the component. The component can then be cured as a single part in its eventual folded form. The embodiment of Figures 11 to 15 shows a method by which the lower wing box 550, can be formed as a single part from a substantially flat sheet lay-up or preform, according to an embodiment of the present invention.

Figure 11 shows a substantially flat sheet preform, which comprises a number of sub-regions having differing properties. The lay-up 500 comprises a first spar flange region 501, which is a substantially planar region formed primarily of pre-preg fibres. A substantially linear formable region 502 is located adjacent the spar flange 501, and is formed primarily of dry fibres to enable that region to be formed or folded in accordance with the methods of the invention. Adjacent that first formable region 502 is a spar region 503. Adjacent the spar region 503 is a second formable region 504, which will again be primarily or wholly formed from dry fibres throughout most or all of the thickness of the lay-up. A cover region 505 is formed in between two formable regions 504 and 506. The cover region is substantially planar and primarily formed from pre-preg fibres. As will be appreciated, the cover region may include certain variations in thickness and ridges or channel like formations to allow the attachment of ribs, for example, or to accommodate other internal components to the wing, but is generally of planar form and so is suited to being deposited using pre-preg fibres without a need for significant further forming operations to form the cover. A further spar region 507 is provided in between folding regions 506 and 508. Like the first spar region 503, this spar region is formed primarily from pre-preg fibres and can incorporate variations in thickness and slight contours to allow incorporation of internal features of the wing box inside the two covers. A second spar flange region 509 is formed adjacent folding region 508 and this region is again formed primarily or wholly from pre-preg fibres and has a generally planar form.

As can be seen, a generally flat lay-up can therefore be provided, which comprises a plurality of substantially planar regions formed from pre-preg fibres, and one or more formable regions 502, 504, 506, 508, which are formed either wholly or primarily from dry fibres, to permit folding or forming of the lay-up in the formable regions. As has been described above, at least a portion of one or more of the substantially planar regions, or any region where forming is not required, may be locally activated, preferably with the application of heat and/or pressure, to activate a binder in those regions prior to any or all of the forming steps described in relation to Figures 12-15 being carried out. After forming, any or all of the dry fibre regions can be locally activated and/or provided with a matrix via known methods as described herein, and subsequently cured.

Figure 11 illustrates a first step in the alternative method, in which the substantially flat lay-up is deposited onto a lay-up surface. The lay-up surface comprises an upper surface of a male tool 571 and two removable sidewall sections 573. The male tool 571 is mounted on a support 572 which is carried by a base 590. The lay-up may be deposited using any form of known automated fibre placement, automated tape lay-up or dry fibre automated fibre placement.

Next, the sidewall sections 573 are removed as shown in Figure 12 and the lay-up 500 and tool components 571 and 572 are vacuum bagged to enable the lay-up to be formed via vacuum assisted drape forming. The vacuum bagging arrangement comprises a bagging film 593, adhesive tape 594 which secures the edge of the bagging film 593 to sweeper blocks 595, and a vacuum port 591.

Figure 13 shows a first, drape forming step in the forming process for the lay-up of Figure 11. In this first step, the spar regions 503 and 507 are drawn about the male tool 572 by a vacuum applied to the vacuum port 591. This first forming operation forms first and second spar regions of the lay-up, 503 and 507 respectively, which are disposed at an angle with respect to the cover region 505, by deformation of the formable regions 504 and 506. Again, any dry-fibre regions of the areas requiring no forming may be activated with heat and/or pressure before the forming step takes place.

Figure 14 shows an intermediate step between the drape forming step and a final forming step. The preform is removed from the bagging arrangement and the support 572 is removed so that the spar flange portions of the lower wing box preform 550 protrude from the male tool 571.

In a final forming step, as illustrated in Figure 15, the spar flange portions 501 and 509 are folded to obtain the lower wing box 550. In this case the spar flanges 501 and 509 are folded by rollers 600. Alternatively, the spar flanges may be formed by pressing or as part of a vacuum-assisted drape forming process

In an alternative method, the lower wing box preform may be removed from the male tool 571 and placed into a complimentary female mould (similar to the female mould 380 shown in Figures 8-10) prior to the final forming step.

As will be appreciated by the skilled reader, internal stringers and/or ribs may be incorporated, similarly to those illustrated in respect of Figure 3. The spar flange regions 501 and 509 can be fixed or bonded to the upper cover 302 to create an enclosed box structure. It is then possible to infuse matrix into the dry fibre regions and cure them to form the final cured part. Prior to infusing the dry fibre regions, any so far un-activated regions may be activated prior to application of the matrix, to stiffen or secure them prior to the application of the matrix and curing steps. Pre-preg fibre regions may be cured simultaneously with the matrix-infused dry fibre regions.

After the lay-up has been formed, matrix is applied to at least the first, dry-fibre, region; and then the formed component is cured to solidify the matrix of the component. As mentioned previously, the matrix may be applied by RTM, Resin Film Infusion (RFI) or Liquid Resin Infusion (LRI) for example. Figures 16 to 19 are schematic drawings showing these methods in more detail.

Figure 6 shows a lay-up suitable for use with a SQRTM, RTM or LRI process, whereas Figure 16 shows a lay-up suitable for use in an RFI process. In the case of Figure 6 the planar part 351 is formed entirely of dry fibre. In the case of Figure 16 the, the layers of dry fibre are interleaved with layers of semi-solid resin film 450 (each film 450 illustrated in Figure 16 by a line of crosses). Alternatively, a single layer of resin film may be provided for multiple layers of dry fibre.

Figure 17 illustrates the RFI curing process in which a preform 601 is laid up with semi-solid resin film 602 and then vacuum bagged into a female mould 603. The vacuum bagging arrangement comprises a bagging film 604, a vacuum line 605 and an adhesive tape 606. The lay-up is then heated to infuse the dry-fibres with the resin matrix material from the semi-solid resin film. A positive pressure may be applied to the lay-up during the curing process, by performing the operation within an autoclave. Alternatively, the vacuum can be omitted when performing this operation within an autoclave. The female mould 380 shown in Figures 8-10 may provide the female mould for an RFI process as shown in Figure 17.

Figure 18 illustrates an alternative method in which the lower wing box is impregnated and cured using Resin Transfer Moulding (RTM). The RTM apparatus comprises a lower female mould 603 and an upper tool 608, and a chamber 610 between the upper mould and lower tool. The upper tool has channels 609 to transfer resin 607 from a melt pot into the chamber 610. The lay-up is placed within the chamber and applied with heat and pressure to wet the lay-up and subsequently cure the composite. Alternatively, the cure can be performed at an ambient temperature. The female mould 380 shown in Figures 8-10 may provide the female mould for the curing and impregnation process shown in Figure 18.

In a third alternative method, the lay-up is infused and cured using Liquid Resin Infusion (LRI), as shown in Figure 19. The LRI apparatus comprises a mould 603 and a vacuum bagging arrangement; comprising a bagging film 604 and an adhesive tape 606. The LRI apparatus further comprises a vacuum pump 611, a resin tap 612 and a resin pot 613. The preform is initially vacuum bagged into the mould and, once the preform has been bagged, the resin tap is opened. The vacuum pump draws resin 607 from the resin pot 613 into the preform so as to infuse the preform with liquid resin. The preform is then cured via heating at ambient pressure within an oven. The female mould 380 shown in Figures 8-10 may provide the female mould for the curing and infusion process as shown in Figure 19.

As will be appreciated, the illustrated method permits the forming of a closed wing box structure with minimal separate parts. This reduces the number of fixing operations required, as well as reducing the number of fixing elements, bonding regions, or regions in which bolts or rivets are required to hold parts together. This all reduces the number of manufacturing and assembly operations which are required, reduces overall weight, and increases general structural integrity of the structure, since fixing means such as bolts and rivets create stress concentrations which can reduce the overall efficiency of the structure. As will be evident to the skilled reader, although the illustrated embodiment relates to the forming of a wing box, the forming method could be applied to any component having two or more substantially planar regions which are separated by a formed region, such as a fold or curved section formed in a forming process. The method could also be applied to any component having substantially planar regions separated by curves, bends or folds. The methods can also be applied to any generally tubular component having a plurality of generally planar sides separated by generally longitudinal folds.

Although the invention has been described above with reference to one or more preferred embodiments, it will be appreciated that various changes or modifications may be made without departing from the scope of the invention as defined in the appended claims.

## Claims

1. A method of forming a composite component, comprising the steps of:
a) providing a lay-up comprising a first region comprising dry fibres and a second region comprising pre-preg fibres;
b) forming the lay-up to create a non-planar portion at the first, dry-fibre, region;
c) applying a matrix to at least the first, dry-fibre, region; and
d) curing the formed component to solidify the matrix of the component.

2. A method according to claim 1, wherein a majority of the fibres present in the thickness of the lay-up in the first region, prior to application of the matrix, are dry fibres.

3. A method according to claim 1, wherein all of the fibres present in the thickness of the lay-up in the first region, prior to application of the matrix, are dry fibres.

4. A method according to any of the preceding claims, wherein a majority of the fibres present in the thickness of the lay-up in the second region are pre-preg fibres.

5. A method according to claim 4, wherein all of the fibres present in the thickness of the lay-up in the second region are pre-preg fibres.

6. A method according to any of the preceding claims, wherein forming the component comprises forming a channel having a closed bottom and an open top, wherein the first, dry fibre region or regions, is/are disposed at and/or adjacent at least one of the top edges of the channel.

7. A method according to any of the preceding claims, wherein the forming step comprises forming a bend having an angle of more than 30 degrees, preferably more than 60 degrees, more preferably more than 90 degrees.

8. A method according to any of the preceding claims, wherein the dry fibres are provided only in, near, or adjacent to regions to be bent, formed or folded in the forming process.

9. A method according to any of the preceding claims, wherein applying a matrix to the dry fibre region includes a matrix injection or infusion process.

10. A method according to any of the preceding claims, further comprising the step of locally activating a first portion of the lay-up to activate a binder or a thermoplastic layer in the first portion of the lay-up, while leaving a second portion of the lay-up in an un-activated state, prior to applying a matrix to the dry-fibre region.

11. A method according to any of the preceding claims, wherein the composite component is a laminate composite component, and providing the lay-up comprises providing a laminated lay-up with layers of dry-fibres and layers of pre-preg fibres.

12. A method according to claim 11 wherein the laminated lay-up is provided in step a), and then formed in step b) after step a).

13. A method according to claim 11 or 12, wherein the layers of dry-fibres slide over one another as the lay-up is formed in step b).

14. A method according to any of the preceding claims, wherein the dry-fibres slide over one another as the lay-up is formed in step b).

15. An uncured composite preform comprising at least one first region comprising dry fibres and at least one second region comprising pre-preg fibres, wherein a majority of the fibres present in a thickness of the preform in the first region are dry fibres and a majority of the fibres present in a thickness of the preform in the second region are pre-preg fibres, the lay-up being formed, curved, bent or folded at the first, dry-fibre, region or regions to provide at least one formed region adjacent the second, pre-preg fibre, region or regions.
